# EUROPÄISCHE PATENTANMELDUNG

(11) **EP 4 838 149 A1**
(43) Veröffentlichungstag der Anmeldung: **11.11.2026**
(21) Anmeldenummer: 26164844.8
(22) Anmeldetag: 14.03.2026
(51) Int. Cl.: F24S 25/65, H02S 20/10

(54) **TRÄGERSYSTEM**

(30) Priorität: 07.05.2025 DE 102025001546
(71) Anmelder: Jurchen Technology GmbH, 97264 Helmstadt (DE)
(72) Erfinder: Siedler, Thomas, 97228 Rottendorf (DE)
(74) Vertreter: Pfeffer, Michael

(57) **Zusammenfassung**

Die Erfindung betrifft ein Trägersystem (1), wobei das Trägersystem (1) mindestens eine erste Photovoltaikeinheit (2) mit mindestens einer Photovoltaikmodulreihe (3, 3a, 3b, 3c, 3d, 3e, 3f) umfasst, wobei die Photovoltaikmodulreihe (3, 3a, 3b, 3c, 3d, 3e, 3f) mindestens ein, vorzugsweise zwei Photovoltaikmodule (4, 4a, 4b, 4c, 4d, 4e, 4f) umfasst, wobei das Trägersystem mindestens zwei Trägerelemente (5, 5a, 5b) umfasst, wobei ein Stützabschnitt (11) unterhalb des Photovoltaikmoduls (4, 4a, 4b, 4c, 4d, 4e, 4f) angeordnet ist, wobei ein erstes Lagerelement (8a) eines ersten Trägerelements (5, 5a) an dem Stützabschnitt (11) angeordnet ist, wobei der Abstand X von einer Außenkante des Photovoltaikmoduls (4, 4a, 4b, 4c, 4d, 4e, 4f) zum Stützabschnitt (11) ein Fünftel der Länge L des Photovoltaikmoduls (4, 4a, 4b, 4c, 4d, 4e, 4f) entspricht.

## Beschreibung

Die Erfindung betrifft ein Trägersystem gemäß dem Oberbegriff des Patentanspruchs 1.

Aus dem Stand der Technik ist ein Trägersystem bekannt, wobei das Trägersystem mehrere Photovoltaikmodulreihen zur Anordnung von Photovoltaikeinheiten umfasst. Die jeweilige Photovoltaikmodulreihe weist dabei mehrere Photovoltaikmodule auf. Ferner umfasst das Trägersystem mehrere Trägerelemente, wobei die Trägerelemente beabstandet zueinander angeordnet sind. Das jeweilige Trägerelement ist mit mindestens einem Bodenoberflächenabstützelement formschlüssig und kraftschlüssig verbunden, wobei das Bodenoberflächenabstützelement zumindest teilweise auf einer Bodenoberfläche angeordnet ist. Das jeweilige Photovoltaikmodul weist einen Endabschnitt auf, der einem Trägerelement zugeordnet ist, und einen Stützabschnitt auf, der einem anderen Trägerelement zugeordnet ist. Im Stand der Technik ist der Stützabschnitt für das andere Trägerelement als weiterer Endabschnitt ausgebildet, der gegenüber von dem anderen Endabschnitt des Photovoltaikmoduls angeordnet ist. Bei sehr stark belastete Photovoltaikmodulen, beispielsweise durch hohe Schneelasten wird ein zusätzliches Trägerelement benötigt, welches in der Mitte unterhalb des Photovoltaikmoduls und zwischen dem einem Trägerelement und dem anderen Trägerelement angeordnet ist, um das sehr schwere Photovoltaikmodul abzustützen. Dadurch erhöht sich die Anzahl der Trägerelemente des gesamten Trägersystems, weil jedes Photovoltaikmodul durch mindestens ein zusätzliches Trägerelement abgestützt werden muss. Im Ergebnis erhöht sich dadurch die Zeit und die Kosten für die Montage des Trägersystems.

Daher ist es die Aufgabe der Erfindung, ein Trägersystem bereitzustellen, welches schnell und kostengünstig montiert werden kann.

Die Aufgabe wird gelöst durch den Patentanspruch 1, insbesondere durch den kennzeichnenden Teil des Patentanspruchs 1. Dabei kann ein Trägersystem vorgesehen sein, wobei das Trägersystem mindestens eine erste Photovoltaikmodulreihe zur Anordnung einer Photovoltaikeinheit umfassen kann. Die Photovoltaikmodulreihe kann mindestens ein, vorzugsweise zwei Photovoltaikmodule umfassen. Das Trägersystem kann mindestens zwei Trägerelemente umfassen, wobei die Trägerelemente beabstandet zueinander angeordnet sein können. Die Trägerelemente können jeweils mit einem Lagerelement zur Lagerung mindestens eines der Photovoltaikmodule verbunden sein, wobei das jeweilige Lagerelement des ersten Trägerelements mindestens einen ersten Lagerabschnitt zur Lagerung mindestens des ersten Photovoltaikmoduls aufweisen kann. Das jeweilige Lagerelement des zweiten Trägerelements kann mindestens einen ersten Lagerabschnitt zur Lagerung mindestens des ersten Photovoltaikmoduls und/oder einen zweiten Lagerabschnitt zur Lagerung mindestens des zweiten und/oder eines weiteren Photovoltaikmoduls aufweisen.

Das jeweilige Trägerelement kann mit mindestens einem Bodenoberflächenabstützelement formschlüssig und/oder kraftschlüssig und/oder stoffschlüssig verbunden sein, wobei das Bodenoberflächenabstützelement zumindest teilweise auf einer Bodenoberfläche und/oder zumindest teilweise in einem Boden angeordnet sein kann. Das jeweilige Photovoltaikmodul kann einen Endabschnitt aufweisen, der dem zweiten Trägerelement zugeordnet sein kann und einen Stützabschnitt aufweisen, der dem ersten Trägerelement zugeordnet sein kann. Der Endabschnitt des Photovoltaikmoduls kann auf dem Lagerelement, insbesondere auf dem ersten und/oder dem zweiten Lagerabschnitt des Lagerelements des zweiten Trägerelements aufliegen, wobei der Stützabschnitt des Photovoltaikmoduls auf dem Lagerelement, insbesondere auf dem ersten Lagerabschnitt des Lagerelements des ersten Trägerelements aufliegen kann. Ferner kann vorgesehen sein, dass der Stützabschnitt unterhalb des Photovoltaikmoduls angeordnet ist, wobei das erste Lagerelement des ersten Trägerelements an dem Stützabschnitt angeordnet ist, wobei der Abstand X von einer Außenkante des Photovoltaikmoduls zum Stützabschnitt ein Fünftel der Länge L des Photovoltaikmoduls entsprechen kann. Des Weiteren kann vorgesehen sein, dass der erste Lagerabschnitt des ersten Lagerelements an dem Stützabschnitt angeordnet sein kann. Aufgrund dieser technischen Lösung kann bei dem erfindungsgemäßen Trägersystem die Anzahl der Trägerelemente reduziert werden. Im Ergebnis können Trägerelemente verwendet werden, welche jeweils ein sehr geringes Gewicht aufweisen und zugleich aufgrund ihrer exponierten Anordnung auch sehr schwere Photovoltaikmodule abstützen, insbesondere lagern können. Ein besonderer Vorteil liegt auch darin, dass beispielsweise auch eine zusätzliche Schneelast, welche auf die Photovoltaikmodule im Winter einwirkt, keine negative Beeinflussung auf die Lagerung der Photovoltaikmodule durch die Trägerelemente hat. Das Trägersystem kann somit unabhängig von den Witterungsverhältnissen und insbesondere im Winter auch bei verschneiten Witterungsbedingungen die Photovoltaikmodule sicher und stabil lagern, ohne dass diese beschädigt werden. Im Ergebnis werden die Kosten und die Zeit zur Montage des Trägersystems reduziert, und gleichzeitig wird ein Trägersystem bereitgestellt, welches auch zuverlässig große und schwere Photovoltaikmodule lagern kann.

Als Endabschnitt des Photovoltaikmoduls wird der Bereich auf dem Photovoltaikmodul definiert, in welchem beispielsweise eine Außenkante, insbesondere eine Eckkante, welche vorzugsweise rechtwinklig oder zumindest teilweise abgerundet ausgebildet sein kann, des Photovoltaikmoduls angeordnet ist. Die Außenkante kann als äußerster Abschnitt des Photovoltaikmoduls definiert werden. Die Außenkante kann beispielsweise als ein Rahmen des jeweiligen Photovoltaikmoduls ausgebildet sein, der das Photovoltaikmodul an seiner äußersten Grenze abschließt.

Der Stützabschnitt kann als ein Bereich definiert werden, in welchem sich das Lagerelement, insbesondere der erste Lagerabschnitt des ersten Lagerelements des ersten Trägerelements erstreckt. Dieser Bereich kann beispielsweise 1cm bis 5cm betragen.

Somit kann beispielsweise der Abstand X bestimmt werden, wobei sich dieser von einem Randbereich oder Kernbereich des Stützabschnitts bis zur äußersten Außenkante des Photovoltaikmoduls bezogen auf eine Photovoltaikreihe des Trägersystems erstreckt.

Die Länge L eines Photovoltaikmoduls kann immer die Längsseite eines rechteckigen Photovoltaikmoduls sein, wobei sich die Länge L beispielsweise von einer ersten Außenkante des Rahmens des Photovoltaikmoduls zu einer, insbesondere spiegelsymmetrisch gegenüberliegenden zweiten Außenkante des Photovoltaikmoduls erstreckt. Somit kann es dann zu einer günstigeren Belastung des Photovoltaikmoduls kommen, insbesondere wegen eines geringeren Feldmoments des Photovoltaikmoduls.

**In** vorteilhafterweise kann das jeweilige erste Trägerelement parallel zu dem zweiten jeweiligen Trägerelement angeordnet sein, um eine stabile Lagerung der Photovoltaikmodule gewährleisten zu können.

Nach einer bevorzugten Ausgestaltung des Trägersystems kann vorgesehen sein, dass das jeweilige Lagerelement des ersten Trägerelements und/oder des zweiten Trägerelements einen Basisabschnitt aufweist, der an dem ersten Lagerabschnitt und/oder an dem zweiten Lagerabschnitt angrenzt, wobei der Basisabschnitt einen Basisbefestigungsabschnitt aufweist, welcher zur Anordnung des Trägerelements ausgebildet ist. Der Basisabschnitt kann beispielsweise den Stützabschnitt vollständig oder teilweise kontaktieren.

Nach einer weiteren bevorzugten Ausgestaltung des Trägersystems kann vorgesehen sein, dass das erste Lagerelement des ersten Trägerelements vorzugsweise nur einen einzigen Basisabschnitt und/oder nur einen Lagerabschnitt aufweist. Vorzugsweise weist das erste Trägerelement exakt nur einen Lagerabschnitt auf, wobei dadurch auch die Materialkosten des Lagerelements verringert werden können, da weniger Material für die Herstellung des Lagerelements verwendet werden muss. Ebenso wird dadurch das Gewicht der Lagerelemente reduziert und somit auch der CO2-Ausstoß reduziert. Man könnte auch zusätzlich auf den Basisabschnitt des Lagerelements verzichten, wenn der erste Lagerabschnitt direkt an dem Trägerelement angeordnet werden kann.

Nach einer weiteren bevorzugten Ausgestaltung des Trägersystems kann vorgesehen sein, dass die erste Photovoltaikmodulreihe und die zweite Photovoltaikmodulreihe miteinander mechanisch verbunden sind, wobei mindestens ein erstes Trägerelement der ersten Photovoltaikmodulreihe und ein erstes Trägerelement der zweiten Photovoltaikmodulreihe mit einem Verbindungselement, insbesondere mit einem Querträger miteinander verbunden sind. Diese Lösung weist den technischen Vorteil auf, dass die Stabilität des gesamten Trägersystems verbessert wird. Insbesondere bei windigen und stürmischen Wetter verbleiben die Trägerelemente an der Stelle im Boden, wo diese zuvor montiert worden sind.

Nach einer weiteren bevorzugten Ausgestaltung des Trägersystems kann vorgesehen sein, dass das Verbindungselement als Abstützelement für mindestens zwei Photovoltaikmodule ausgebildet ist. Dabei kann das Verbindungselement die Außenkante, insbesondere dessen Rahmen des ersten Photovoltaikmoduls und die Außenkante, insbesondere dessen Rahmen des zweiten Photovoltaikmoduls kontaktieren. In vorteilhafterweise kann das Verbindungselement vorzugsweise in einem im Wesentlichen rechten Winkel zu dem jeweiligen Trägerelement angeordnet sein. Ebenso ist es denkbar, dass zwischen dem jeweiligen Photovoltaikmodul und dem als Verbindungselement ausgebildeten Abstützelement ein Spalt, insbesondere ein Luftspalt vorgesehen sein kann. Vorzugsweise bei beispielsweise windigen Witterungsbedingungen und/oder bei einer auf die Photovoltaikmodule wirkenden Schneelast können die Photovoltaikmodule das Verbindungselement kontaktieren. Somit werden die jeweiligen Verbindungselemente nicht dauerhaft durch die Photovoltaikmodule mechanisch belastet und die Lebensdauer sowie die Stabilität der jeweiligen Verbindungselemente kann in vorteilhafterweise verlängert beziehungsweise verbessert werden.

Sehr sicher, stabil und kostengünstig kann das Trägersystem ausgestaltet werden, wenn das Verbindungselement mit dem ersten Trägerelement der ersten Photovoltaikmodulreihe und/oder dem ersten Trägerelement der zweiten Photovoltaikmodulreihe mittels einer Schraubverbindung und/oder Steckverbindung kraftschlüssig und/oder formschlüssig verbunden ist. So kann das Verbindungselement auch in eine an dem jeweiligen Trägerelement vorgesehene Ausnehmung, Öffnung, insbesondere Loch eingesteckt werden. Das jeweilige Trägerelement kann ein Durchgangsloch aufweisen, durch welches das Verbindungselement hindurchführbar ist. Somit kann das Verbindungselement auch bei einem bereits installierten Trägersystem, insbesondere nachträglich installiert werden.

Eine Neigung der Photovoltaikmodule bei gleichzeitiger stabiler Sicherung des Trägersystems kann erzielt werden, wenn der Abstand des Bodenoberflächenabstützelements zum Lagerelement des ersten Trägerelements kleiner ist als der Abstand des Bodenoberflächenabstützelements zum Lagerelement des zweiten Trägerelements.

Nach einer bevorzugten Ausführung des Trägersystems kann vorgesehen sein, dass die jeweiligen Photovoltaikmodule eine Flächenlast von 65 kg/m² bis 85 kg/m², vorzugsweise bis 400kg/m² aufweisen und/oder die jeweiligen Trägerelemente jeweils einen Durchmesser von 14mm bis 18mm, vorzugsweise 16mm aufweisen. Wenn der Abstand X von einer Außenkante des Photovoltaikmoduls zum Stützabschnitt ein Fünftel der Länge L des Photovoltaikmoduls entspricht, können Photovoltaikmodule vorzugsweise mit einem Gewicht von 20 kg bis 35 kg angeordnet werden und gleichzeitig wird die Anzahl der Trägerelemente des Trägersystems reduziert. Des Weiteren reicht es dann auch aus, Trägerelemente zu verwenden, welche einen Durchmesser von 14mm bis 18mm, vorzugsweise von 16mm aufweisen und vorzugsweise als Stäbe, insbesondere als Metallstäbe ausgebildet sind. Wenigstens ein Ende des Trägerelements kann dabei spitzförmig ausgebildet sein, um dieses einfacher und besser in einen Boden zu montieren.

Nach einer weiteren bevorzugten Ausführung des Trägersystems kann vorgesehen sein, dass der maximale Testdruck der jeweiligen Photovoltaikmodule im Bereich von +/- 1600 Pa bis +/- 2500 Pa, vorzugsweise bei +/- 2400 Pa liegt. Das erfindungsgemäße Trägersystem ist für diese Art von Photovoltaikmodulen geeignet, welche diesen Testdruck standhalten, wenn der Winddruck oder andere Belastungen wie beispielsweise Schnee oder Hagel auf das Photovoltaikmodul einwirken, ohne dass es zu strukturellen Schäden desselben kommt. Dieser Wert ist wichtig, um sicherzustellen, dass die Photovoltaikmodule auch unter extremen Wetterbedingungen, wie starkem Wind oder Schneelasten, sicher und funktionstüchtig bleiben.

Durch die Erfindung kann erreicht werden, dass möglichst viele und unterschiedliche Photovoltaikmodule für derartige Trägersysteme geeignet sind, ohne das Trägersystem zu im Wesentlichen zu verändern. Somit kann eine Standardisierung des Trägersystem erfolgen, wenn die oben beschriebenen Photovoltaikmodule mit diesen technischen Eigenschaften verwendet werden.

Die Erfindung sowie das technische Umfeld werden nachfolgend anhand der Figuren näher erläutert. Es ist darauf hinzuweisen, dass die Figuren besonders bevorzugte Ausführungsbeispiele der Erfindung zeigen, die Erfindung jedoch nicht darauf beschränkt ist.

Die Figuren zeigen:
- Figur 1: ein Trägersystem umfassend zehn Photovoltaikmodulreihen in einer Seitenansicht gemäß einer ersten Ausführungsform,
- Figur 2: das Trägersystem in einer Draufsicht von oben gemäß der ersten Ausführungsform,
- Figur 3: einen Ausschnitt des Trägersystems gemäß der ersten Ausführungsform,
- Figur 4: einen Ausschnitt eines Trägersystems gemäß einer zweiten Ausführungsform, und
- Figur 5: das Trägersystem gemäß der ersten Ausführungsform, welches auf einem Hang angeordnet ist.

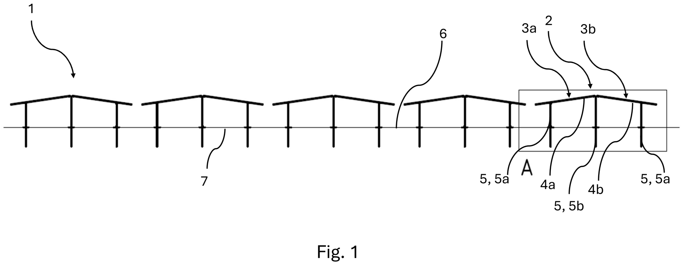

**In** den Figuren 1 bis 3 ist ein erfindungsgemäßes Trägersystem 1 visualisiert, wobei das Trägersystem 1 im vorliegenden Ausführungsbeispiel fünf Photovoltaikeinheiten 2 sowie zehn Photovoltaikmodulreihen 3 umfasst, wobei jeder Photovoltaikeinheit 2 jeweils zwei Photovoltaikmodulreihen 3 zugeordnet sein können. Der Übersicht halber sind in der Figur 1 die Bezugszeichen teilweise nur im Bezugsfeld A gezeigt, in welchem eine Photovoltaikeinheit 2 dargestellt ist.

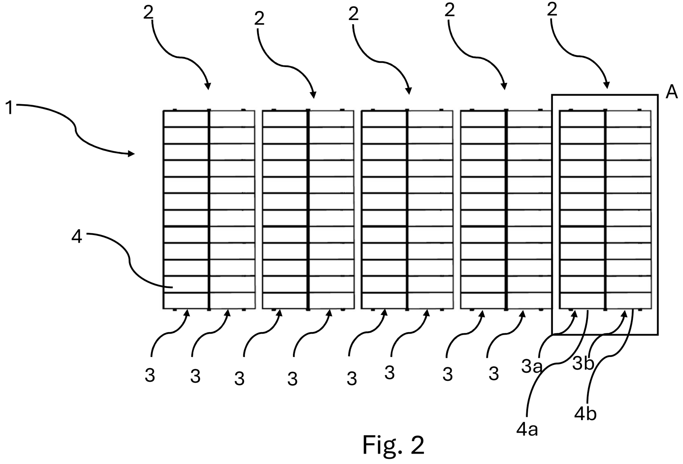

Die Figur 2 zeigt eine Ansicht des Trägersystems 1 von oben, wobei das Trägersystem 1 im vorliegenden Ausführungsbeispiel 120 Photovoltaikmodule umfasst. Auch hier wird der Übersicht halber nur ein Photovoltaikmodul 4 mit einem Bezugszeichen versehen.

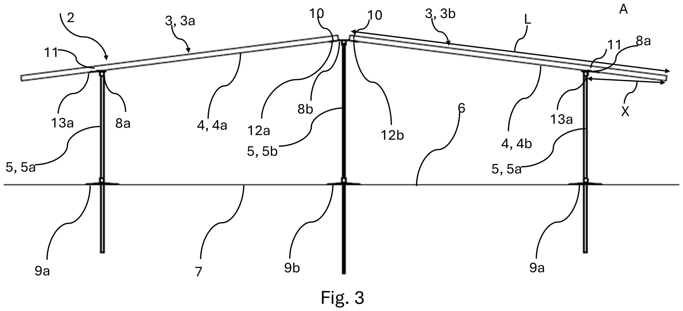

**In** der Figur 3 ist die Photovoltaikeinheit 2 aus dem Bezugsfeld A näher dargestellt. Die Figur 3 zeigt die jeweilige Photovoltaikmodulreihe 3, 3a, 3b, wobei in der Figur 3 nur zwei Photovoltaikmodule 4, 4a, 4b in der Seitenansicht zu erkennen sind. Das Trägersystem 1 umfasst mehrere Trägerelemente 5, wobei in der Figur 3 ein erstes Trägerelement 5a jeweils linksseitig und rechtsseitig der Photovoltaikeinheit 2 und ein zweites Trägerelement 5b gezeigt ist. Der Abstand des linksseitigen und rechtsseitigen ersten Trägerelements 5a zu dem zweiten Trägerelement 5b kann im Wesentlich gleichgroß sein. Die Trägerelemente 5, 5a, 5b sind beabstandet zueinander angeordnet und jeweils kraftschlüssig und/oder formschlüssig mit einer Bodenoberfläche 6 eines Bodens 7 und/oder dem Boden 7 verbunden. Die Trägerelemente 5, 5a, 5b sind jeweils mit einem Lagerelement 8, 8a, 8b zur Lagerung mindestens eines der Photovoltaikmodule 4, 4a, 4b verbunden. Das jeweilige Lagerelement 8a des jeweiligen ersten Trägerelements 5a weist mindestens einen ersten Lagerabschnitt 13a zur Lagerung mindestens des ersten Photovoltaikmoduls 4a bzw. 4b auf, wobei das jeweilige Lagerelement 8b des zweiten Trägerelements 5b mindestens einen ersten Lagerabschnitt 12a zur Lagerung mindestens des ersten Photovoltaikmoduls 4a und/oder einen zweiten Lagerabschnitt 12b zur Lagerung mindestens eines zweiten Photovoltaikmoduls 4b und/oder eines weiteren Photovoltaikmoduls 4 aufweist. Das jeweilige Trägerelement 5, 5a, 5b ist mit mindestens einem Bodenoberflächenabstützelement 9a, 9b formschlüssig und/oder kraftschlüssig und/oder stoffschlüssig verbunden, wobei das jeweilige Bodenoberflächenabstützelement 9a, 9b zumindest teilweise auf der Bodenoberfläche 6 und/oder zumindest teilweise in dem Boden 7 angeordnet ist. Der Abstand des Bodenoberflächenabstützelements 9a zum Lagerelement 8a des ersten Trägerelements 5, 5a ist kleiner als der Abstand des Bodenoberflächenabstützelements 9, 9b zum Lagerelement 8b des zweiten Trägerelements 5, 5b.

Das jeweilige Photovoltaikmodul 4, 4a, 4b weist einen Endabschnitt 10 auf, der dem zweiten Trägerelement 5, 5b zugeordnet ist, und weist einen Stützabschnitt 11 auf, der jeweils dem ersten Trägerelement 5, 5a zugeordnet ist, wobei der Endabschnitt 10 des Photovoltaikmoduls 4, 4a, 4b auf dem Lagerelement 8b, insbesondere auf dem ersten Lagerabschnitt 12a und/oder dem zweite Lagerabschnitt 12b des Lagerelements 8b des zweiten Trägerelements 5, 5b aufliegt. Der Stützabschnitt 11 des Photovoltaikmoduls 4, 4a, 4b liegt jeweils auf dem Lagerelement 8a, insbesondere auf dem ersten Lagerabschnitt 13a des Lagerelements 8a des ersten Trägerelements 5, 5a auf.

Hierbei ist der Stützabschnitt 11 unterhalb des Photovoltaikmoduls 4, 4a, 4b angeordnet, wobei das erste Lagerelement 8a des ersten Trägerelements 5, 5a an dem Stützabschnitt 11 angeordnet ist, wobei der Abstand X von einer Außenkante des Photovoltaikmoduls 4, 4a, 4b zum jeweiligen Stützabschnitt 11 im Wesentlichen ein Fünftel der Länge L des jeweiligen Photovoltaikmoduls 4, 4a, 4b entspricht.

Das jeweilige Lagerelement 8a, 8b des ersten Trägerelements 5, 5a und/oder des zweiten Trägerelements 5, 5b weist einen einzigen Basisabschnitt auf, der an dem ersten Lagerabschnitt 12a, 13a und/oder zweiten Lagerabschnitt 12b angrenzt, wobei der Basisabschnitt einen Basisbefestigungsabschnitt aufweist, welcher zur Anordnung des jeweiligen Trägerelements 5, 5a, 5b ausgebildet ist.

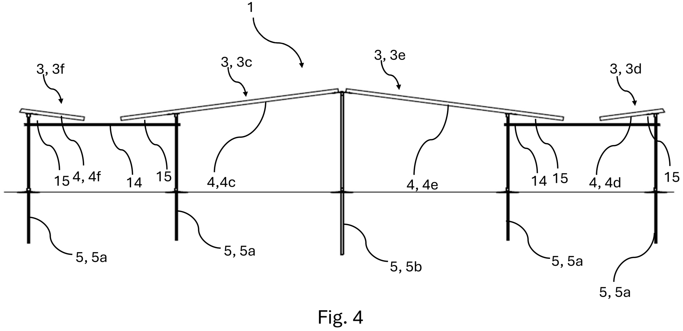

**In** der Figur 4 ist eine zweite Ausführungsform des Trägersystems 1 visualisiert. Dabei sind eine erste Photovoltaikmodulreihe 3, 3c bzw. 3, 3d und eine zweite Photovoltaikmodulreihe 3, 3e bzw. 3, 3f miteinander mechanisch verbunden, wobei mindestens ein erstes Trägerelement 5, 5a der ersten Photovoltaikmodulreihe 3, 3c bzw. 3, 3d und ein erstes Trägerelement 5, 5a der zweiten Photovoltaikmodulreihe 3, 3e bzw. 3, 3f mit einem Verbindungselement 14, insbesondere mit einem Querträger miteinander verbunden sind. Das Verbindungselement 14 kann beispielsweise als Abstützelement für mindestens zwei Photovoltaikmodule 4, 4c, 4f bzw. 4, 4d, 4e ausgebildet sein. Zwischen dem jeweiligen Photovoltaikmodul 4, 4c, 4d, 4e, 4f und dem als Verbindungselement 14 ausgebildeten Abstützelement kann ein Spalt 15, insbesondere ein Luftspalt vorgesehen sein. Ebenso kann bei einer auf das jeweilige Photovoltaikmodul 4, 4c, 4d, 4e, 4f wirkenden schweren Last, beispielsweise Schnee das Verbindungselement 14 die Außenkante des ersten Photovoltaikmoduls 4, 4c, 4d und die Außenkante des zweiten Photovoltaikmoduls 4, 4e, 4f kontaktieren. Das Verbindungselement 14 kann mit dem ersten Trägerelement 5, 5a der ersten Photovoltaikmodulreihe 3, 3c bzw. 3, 3d und/oder dem ersten Trägerelement 5, 5a der zweiten Photovoltaikmodulreihe 3, 3f bzw. 3, 3e beispielsweise mittels einer Schraubverbindung oder alternativ mit einer Steckverbindung kraftschlüssig und/oder formschlüssig verbunden sein.

Die in den Ausführungsbeispielen gezeigten jeweiligen Photovoltaikmodule 4, 4a, 4b, 4c, 4d, 4e, 4f können jeweils eine Flächenlast von 65 kg/m² bis 85 kg/m², vorzugsweise bis 400kg/m² aufweisen und die jeweiligen Trägerelemente 5, 5a, 5b können jeweils einen Durchmesser von 14mm bis 18mm, vorzugsweise 16mm aufweisen.

Das Trägersystem 1 ist besonders dafür geeignet, wenn ein maximaler Testdruck der jeweiligen Photovoltaikmodule 4, 4a, 4b, 4c, 4d, 4e, 4f im Bereich von +/- 1600 Pa bis +/-2500 Pa, vorzugsweise bei +/- 2400 Pa liegt.

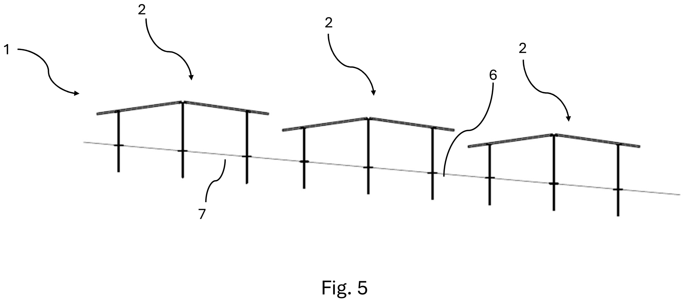

**In** der Figur 5 ist das Trägersystem 1 gemäß der ersten Ausführungsform gezeigt, welches auf einem Hang angeordnet ist.

### Bezugszeichenliste

- 1: Trägersystem
- 2: Photovoltaikeinheit
- 3, 3a, 3b, 3c, 3d, 3e, 3f: Photovoltaikmodulreihe
- 4, 4a, 4b, 4c, 4d, 4e, 4f: Photovoltaikmodule
- 5, 5a, 5b: Trägerelemente
- 6: Bodenoberfläche
- 7: Boden
- 8a, 8b: Lagerelement
- 9a, 9b: Bodenoberflächenabstützelement
- 10: Endabschnitt
- 11: Stützabschnitt
- 12a: erster Lagerabschnitt des Lagerelements 8b
- 12b: zweiter Lagerabschnitt des Lagerelements 8b
- 13a: erster Lagerabschnitt des Lagerelements 8a
- 14: Verbindungselement
- 15: Spalt

## Patentansprüche

1. Trägersystem (1), wobei das Trägersystem (1) mindestens eine erste Photovoltaikeinheit (2) mit mindestens einer Photovoltaikmodulreihe (3, 3a, 3b, 3c, 3d, 3e, 3f) umfasst,
wobei die Photovoltaikmodulreihe (3, 3a, 3b, 3c, 3d, 3e, 3f) mindestens ein, vorzugsweise zwei Photovoltaikmodule (4, 4a, 4b, 4c, 4d, 4e, 4f) umfasst, wobei das Trägersystem mindestens zwei Trägerelemente (5, 5a, 5b) umfasst,
- wobei die Trägerelemente (5, 5a, 5b) beabstandet zueinander angeordnet sind,
- wobei die Trägerelemente (5, 5a, 5b) jeweils mit einem Lagerelement (8a, 8b) zur Lagerung mindestens eines der Photovoltaikmodule (4, 4a, 4b, 4c, 4d, 4e, 4f) verbunden sind,
- wobei das jeweilige Lagerelement (8a) des ersten Trägerelements (5, 5a) mindestens einen ersten Lagerabschnitt (13a) zur Lagerung mindestens des ersten Photovoltaikmoduls (4, 4a, 4b, 4c, 4d, 4e, 4f) aufweist,
- wobei das jeweilige Lagerelement (8b) des zweiten Trägerelements (5, 5b) mindestens einen ersten Lagerabschnitt (12a) zur Lagerung mindestens des ersten Photovoltaikmoduls (4, 4a, 4b, 4c, 4d, 4e, 4f) und/oder einen zweiten Lagerabschnitt (12b) zur Lagerung mindestens des zweiten Photovoltaikmoduls (4, 4a, 4b, 4c, 4d, 4e, 4f) und/oder eines weiteren Photovoltaikmoduls (4, 4a, 4b, 4c, 4d, 4e, 4f) aufweist,
- wobei das jeweilige Trägerelement (5, 5a, 5b) mit mindestens einem Bodenoberflächenabstützelement (9a, 9b) formschlüssig und/oder kraftschlüssig und/oder stoffschlüssig verbunden ist,
- wobei das Bodenoberflächenabstützelement (9a, 9b) zumindest teilweise auf einer Bodenoberfläche (6) und/oder zumindest teilweise in einem Boden (7) angeordnet ist,
- wobei das jeweilige Photovoltaikmodul (4, 4a, 4b, 4c, 4d, 4e, 4f) einen Endabschnitt (10) aufweist, der dem zweiten Trägerelement (5, 5b) zugeordnet ist, und einen Stützabschnitt (11) aufweist, der dem ersten Trägerelement (5, 5a) zugeordnet ist,
- wobei der Endabschnitt (10) des Photovoltaikmoduls (4, 4a, 4b, 4c, 4d, 4e, 4f) auf dem Lagerelement (8b), insbesondere auf dem ersten Lagerabschnitt (12a) und/oder dem zweiten Lagerabschnitt (12b) des Lagerelements (8b) des zweiten Trägerelements (5, 5b) aufliegt,
- wobei der Stützabschnitt (11) des Photovoltaikmoduls (4, 4a, 4b, 4c, 4d, 4e, 4f) auf dem Lagerelement (8a), insbesondere auf dem ersten Lagerabschnitt (13a) des Lagerelements (8a) des ersten Trägerelements (5, 5a) aufliegt,
**dadurch gekennzeichnet, dass**
der Stützabschnitt (11) unterhalb des Photovoltaikmoduls (4, 4a, 4b, 4c, 4d, 4e, 4f) angeordnet ist, wobei das erste Lagerelement (8a) des ersten Trägerelements (5, 5a) an dem Stützabschnitt (11) angeordnet ist, wobei der Abstand X von einer Außenkante des Photovoltaikmoduls (4, 4a, 4b, 4c, 4d, 4e, 4f) zum Stützabschnitt (11) ein Fünftel der Länge L des Photovoltaikmoduls (4, 4a, 4b, 4c, 4d, 4e, 4f) entspricht.

2. Trägersystem (1) nach Anspruch 1, **dadurch gekennzeichnet, dass** das jeweilige Lagerelement (8a) des ersten Trägerelements (5, 5a) und/oder des zweiten Trägerelements (5, 5b) einen Basisabschnitt aufweist, der an dem ersten Lagerabschnitt (12a, 13a) und/oder an dem zweiten Lagerabschnitt (12b) angrenzt, wobei der Basisabschnitt einen Basisbefestigungsabschnitt aufweist, welcher zur Anordnung des jeweiligen Trägerelements (5, 5a, 5b) ausgebildet ist.

3. Trägersystem (1) nach Anspruch 1 oder 2, **dadurch gekennzeichnet, dass** das erste Lagerelement (8a) des ersten Trägerelements (5, 5a) nur einen Basisabschnitt und/oder nur einen einzigen Lagerabschnitt (13a) aufweist.

4. Trägersystem (1) nach mindestens einem der Ansprüche 1 bis 3, **dadurch gekennzeichnet, dass** die erste Photovoltaikmodulreihe (3, 3a, 3c, 3d) und die zweite Photovoltaikmodulreihe (3, 3b, 3e, 3f) miteinander mechanisch verbunden sind, wobei mindestens ein erstes Trägerelement (5, 5a) der ersten Photovoltaikmodulreihe (3, 3a, 3c, 3d) und ein erstes Trägerelement (5, 5a) der zweiten Photovoltaikmodulreihe (3, 3b, 3e, 3f) mit einem Verbindungselement (14), insbesondere mit einem Querträger miteinander verbunden sind.

5. Trägersystem (1) nach Anspruch 4, **dadurch gekennzeichnet, dass** das Verbindungselement (14) als Abstützelement für mindestens zwei Photovoltaikmodule (4, 4a, 4c, 4d) ausgebildet ist.

6. Trägersystem (1) nach Anspruch 4 oder 5, **dadurch gekennzeichnet, dass** zwischen dem jeweiligen Photovoltaikmodul (4, 4a, 4c, 4d) und dem als Verbindungselement (14) ausgebildeten Abstützelement ein Spalt (15), insbesondere ein Luftspalt vorgesehen ist.

7. Trägersystem (1) nach mindestens einem der Ansprüche 4 bis 6, **dadurch gekennzeichnet, dass** das Verbindungselement (14) die Außenkante des ersten Photovoltaikmoduls (4, 4a, 4c, 4d) und die Außenkante des zweiten Photovoltaikmoduls (4, 4b, 4e, 4f) kontaktiert.

8. Trägersystem (1) nach mindestens einem der Ansprüche 1 bis 7, **dadurch gekennzeichnet, dass** das Verbindungselement (14) mit dem ersten Trägerelement (5, 5a) der ersten Photovoltaikmodulreihe (3, 3a, 3c, 3d) und/oder dem ersten Trägerelement (5, 5a) der zweiten Photovoltaikmodulreihe (3, 3b, 3e, 3f) mittels einer Schraubverbindung und/oder Steckverbindung kraftschlüssig und/oder formschlüssig verbunden ist.

9. Trägersystem (1) nach mindestens einem der Ansprüche 1 bis 8, **dadurch gekennzeichnet, dass** der Abstand des Bodenoberflächenabstützelements (9a) zum Lagerelement (8a) des ersten Trägerelements (5, 5a) kleiner ist als der Abstand des Bodenoberflächenabstützelements (9b) zum Lagerelement (8b) des zweiten Trägerelements (5, 5b).

10. Trägersystem (1) nach mindestens einem der Ansprüche 1 bis 9, **dadurch gekennzeichnet, dass** die jeweiligen Photovoltaikmodule (4, 4a, 4b, 4c, 4d, 4e, 4f) eine Flächenlast von 65 kg/m² bis 85 kg/m², vorzugsweise bis 400kg/m² aufweisen und/oder die jeweiligen Trägerelemente (5, 5a, 5b) jeweils einen Durchmesser von 14mm bis 18mm, vorzugsweise 16mm aufweisen.

11. Trägersystem nach mindestens einem der Ansprüche 1 bis 10, **dadurch gekennzeichnet, dass** ein maximaler Testdruck der jeweiligen Photovoltaikmodule im Bereich von +/- 1600 Pa bis +/- 2500 Pa, vorzugsweise bei +/- 2400 Pa liegt.

12. Trägersystem nach mindestens einem der Ansprüche 1 bis 11, **dadurch gekennzeichnet, dass** der erste Lagerabschnitt (13a) des ersten Lagerelements (8a) an dem Stützabschnitt (11) angeordnet ist.
